# EUROPEAN PATENT APPLICATION

(11) **EP 3 543 132 A1**
(43) Date of publication of application: **25.09.2019**
(21) Application number: 19159176.7
(22) Date of filing: 25.02.2019
(51) Int. Cl.: B64D 13/06, B64D 37/32

(54) **COOLED AIR SOURCE FOR CATALYTIC INERTING**

(30) Priority: 19.03.2018 US 201815924525
(71) Applicant: Hamilton Sundstrand Corporation, Charlotte, NC 28217-4578 (US)
(72) Inventor: D'ORLANDO, Paul M., Simsbury, CT Connecticut 06070 (US); SURAWSKI, Eric, Glastonbury, CT Connecticut 06033 (US)
(74) Representative: Dehns

(57) **Abstract**

An aircraft inert gas generating system includes a fuel source configured to supply fuel, a stream of reaction air (119) having a first temperature, an air-fuel mixing unit configured to receive an amount of the fuel and an amount of the reaction air stream (119) to create an air-fuel mixture, and a catalytic oxidation unit configured to receive and react the air-fuel mixture. The stream of reaction air (119) includes an amount of mixing air (117) from a mixing air source, and the mixing air source includes a primary heat exchanger (108) of an aircraft ram circuit and a cooling air extraction element (128) proximate the heat exchanger (108). The mixing air can alternatively include cool air from a heat sink air source.

## Description

### BACKGROUND

Fuel tanks can contain potentially combustible combinations of oxygen, fuel vapors, and ignition sources. To prevent combustion in aircraft fuel tanks, commercial aviation regulations require actively managing the risk of explosion in fuel tank ullages. One type of inerting system is an On-Board Inert Gas Generation System (OBIGGS), which uses bleed air and pressurized hollow fiber membranes to produce inert gas. Other approaches utilize catalytic reactors to produce inert gas from hydrocarbon-air mixtures, and often rely on bleed air to drive the reaction. However, the pressure of bleed air extracted from an aircraft engine compressor varies throughout a mission, which can affect inert gas production quantity and quality in either type of system. Furthermore, aircraft design is trending toward lower pressure bleed systems and increasingly electric power distribution architectures.

Both systems also require bleed air temperature regulation between a minimum and maximum temperature to ensure efficient membrane permeability and/or catalytic reaction, as well as to prevent damage to system and downstream componentry. These systems use a dedicated heat exchanger in the ram air circuit to manage bleed air temperature. There are negative impacts to having a dedicated heat exchanger in the ram circuit. Most notably, such a dedicated heat exchanger can partially obstruct ram air to an environmental control system heat exchanger or such heat exchanger may require a dedicated ram circuit which can consume more volume and weight within an aircraft. Thus, a need exists for a means of regulating bleed air temperature having a reduced spatial and/or energy impact on the environmental control system and ram air circuit.

### SUMMARY

An aircraft inert gas generating system includes a fuel source configured to supply fuel, a stream of reaction air having a first temperature, an air-fuel mixing unit configured to receive an amount of the fuel and an amount of the reaction air stream to create an air-fuel mixture, and a catalytic oxidation unit configured to receive and react the air-fuel mixture. The stream of reaction air includes an amount of mixing air from a mixing air source, and the mixing air source includes a primary heat exchanger of an aircraft ram circuit and a cooling air extraction element proximate the heat exchanger.

An aircraft inert gas generating system includes a fuel source configured to supply fuel, a stream of reaction air having a first temperature, an air-fuel mixing unit configured to receive an amount of the fuel and an amount of the reaction air stream to create an air-fuel mixture, and a catalytic oxidation unit configured to receive and react the air-fuel mixture. The stream of reaction air includes an amount of mixing air, and the mixing air includes cool air from a heat sink air source.

A method of generating inert gas for use in an aircraft includes supplying fuel to an air-fuel mixing unit, supplying a stream of reaction air at a first temperature to the air-fuel mixing unit, and generating an air-fuel mixture within the air-fuel mixing unit. The method further includes providing the mixture to a catalytic oxidation unit and reacting the mixture in the catalytic oxidation unit to produce the inert gas. The stream of reaction air includes an amount of mixing air from a mixing air source, and the amount of mixing air has a second temperature.

### BRIEF DESCRIPTION OF THE DRAWINGS

FIG. 1 is a schematic illustration of a reaction air source for a catalytic inerting system.
FIG. 2 is a schematic illustration of an alternative reaction air source.
FIG. 3 is a schematic illustration of a second alternative reaction air source.
FIG. 4 is a schematic illustration of a third alternative reaction air source.

### DETAILED DESCRIPTION

The present invention is directed to a source of cool air for a catalytic inerting system, and more specifically, a source of cool air that will be mixed with fuel and reacted in a catalytic inerting unit. The air can originate from within the ram circuit, or from a cabin cooling circuit. None of the air sources require a dedicated ram air heat exchanger to thermally regulate the air provided to the inerting system.

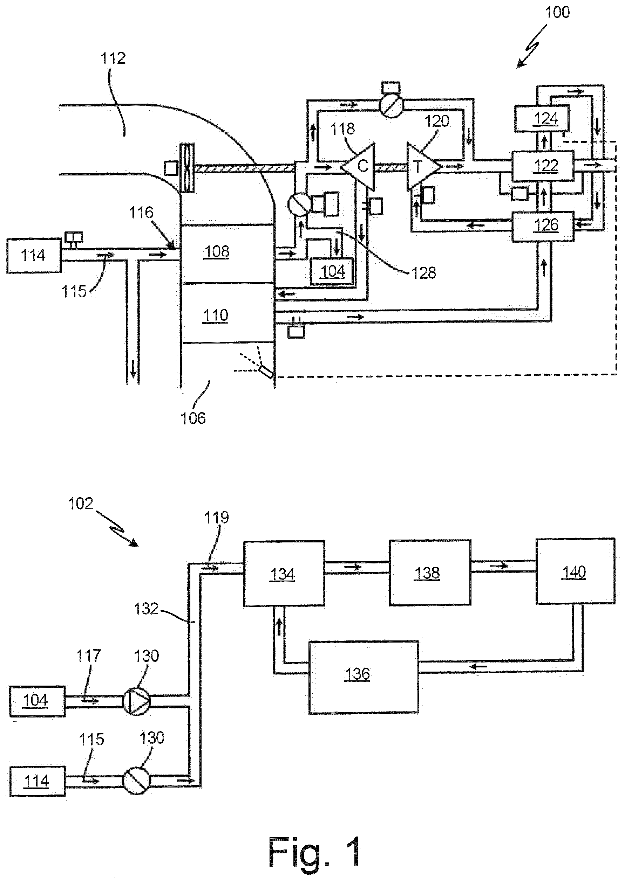

FIG. 1 is a schematic illustration of environmental control system (ECS) 100 (shown top), and inerting system 102 (shown bottom), fluidly connected to ECS 100 by mixing air connector 104. ECS 100 is configured to provide compressed air, such as turbine engine bleed air, to inerting system 102. In other embodiments, such as in the case of a bleedless or reduced bleed aircraft, the compressed air can be from a compressor. ECS 100 includes a ram air portion having ram air inlet 106, primary heat exchanger 108, secondary heat exchanger 110, and ram air outlet 112. ECS 100 further includes compressed air source 114 (e.g., an engine or a compressor) configured to provide compressed air 115 to primary heat exchanger 108 via compressed air inlet 116. Compressed air 115 (at a temperature of roughly 450°F) passes through primary heat exchanger 108 and can further pass through/interact with additional components of ECS 100. Such components can include compressor 118, turbine 120 that drives compressor 118, condenser 122, water collector 124, and reheater 126.

Cooling air extraction element 128 is arranged within ECS 100 to collect an amount of compressed air 115 that passes through primary heat exchanger 108. More specifically, extraction element 128 can be positioned proximate the cold air outlet of primary heat exchanger 108 on a side opposite inlet 116. The air collected by extraction element 128, or mixing air 117, can be provided to inerting system 102 via connector 104. In the embodiment shown, extraction element 128 is a cold corner tap, referred to as such due to the placement of extraction element 128 at the cold corner of primary heat exchanger 108. The cold corner tap can include a wall or baffle placed at the cold air outlet that diverts an amount of the flow into a duct or other flow line. In other embodiments, extraction element 128 can be any type of tap, port, valve, or flow line configured to extract an amount of compressed air 115 coming off of primary heat exchanger 108. Selection of extraction element 128 can be based on ECS design, spatial availability, and/or mixing air needs.

As can be seen in FIG. 1, mixing air 117 downstream of connector 104 can be combined with an amount of compressed air 115 from compressed air source 114 provided by a supply line that bypasses primary heat exchanger 108. One or more valves 130 can be provided to control the flow and/or mixing of compressed air 115 and mixing air 117. Valves 130 can be check valves, trim valves, metering valves, or other suitable valves, and can be passively or actively controlled. Compressed air 115 and mixing air 117 combine to form reaction air 119, which is supplied to inerting system 102 via feed line 132. More specifically, reaction air 119 enters mixing unit 134 where it can be combined with an amount of hydrocarbon fuel from fuel tank 136. The air-fuel mixture is provided to catalytic oxidation unit 138 and reacted with a catalyst to form a gaseous, inert byproduct. The byproduct is further treated within condenser 140 such that an inert, carbon dioxide rich gas can be provided to the ullage space of fuel tank 136. In some embodiments, the inert gas can additionally or alternatively be provided to another system requiring inert gas, such as a cargo hold fire suppression system.

Reaction air 119 should be thermally regulated both to avoid potential combustion of fuel within mining unit 134 and/or catalytic oxidation unit 138, and to drive the catalytic reaction. As a result, reaction air 119 should be maintained at or below 350°F. Extraction element 128 can be arranged to provide mixing air 117 at a suitable temperature such that, whether or not it is combined with compressed air 115, will result in this desired temperature of reaction air 119. In some instances (e.g., stage of a flight), the temperature of mixing air 117 can be less than the temperature of reaction air 119 in order to accommodate combining with the relatively hot (450°F) compressed air. In other instances, mixing air 117 might be mixed with little or no compressed air 115, and would, therefore, be roughly the same temperature as reaction air 119.

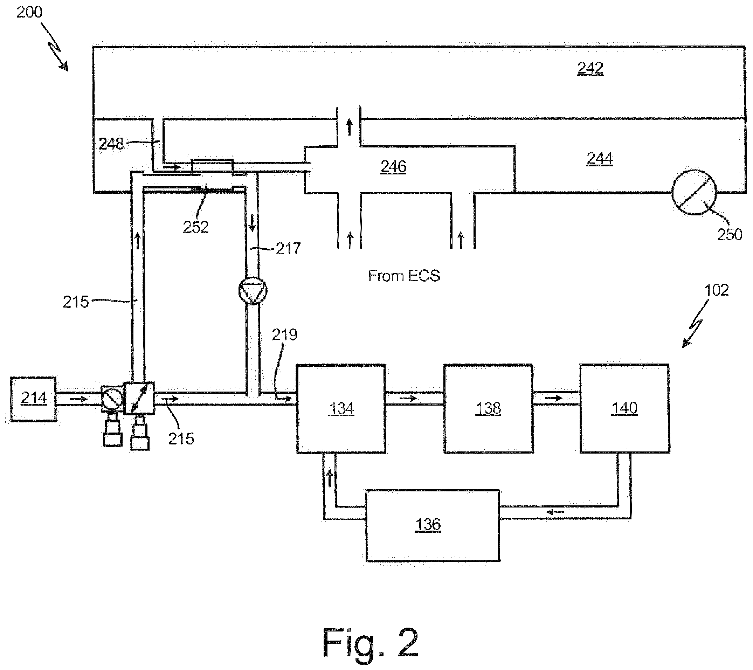

FIG. 2 is schematic illustration of inerting system 102 supplied by alternative cooling air source 200. Cooling air source 200 includes aircraft cabin 242 and pressurized space 244, which can be, for example, and aircraft cargo bay. Mix manifold 246 is located within pressurized space 244 and fluidly connects cabin 242 with the ECS. Pressurized space 244 can also include recirculation line 248 and cabin exhaust outlet 250. In operation, conditioned air from the ECS flows into cabin 242 through mix manifold 246. Some cabin air enters recirculation line 248 and flow to mix manifold 246, where it mixes with ECS air. Some cabin air is displaced by air flowing in from mix manifold 246 and is exhausted through exhaust outlet 250. Recirculation air can have a temperature ranging from, for example, 70-120°F.

Cooling air source 200 further includes compressed air source 214 (similar to compressed air source 114) and dedicated heat exchanger 252 positioned upstream of mix manifold 246, and in thermal communication with recirculation line 248. Compressed air 215 from compressed air source 214 can selectively be provided (e.g., by a valve) to heat exchanger 252. The relatively cool recirculation air within recirculation line 248 acts as a heat sink and reduces the temperature of bleed air 215 within heat exchanger 252 to create mixing air 217. As was the case with mixing air 117, mixing air 217 may or may not be combined with untreated compressed air 215 to form reaction air 219 (at or below 350°F) to be supplied to inerting system 102.

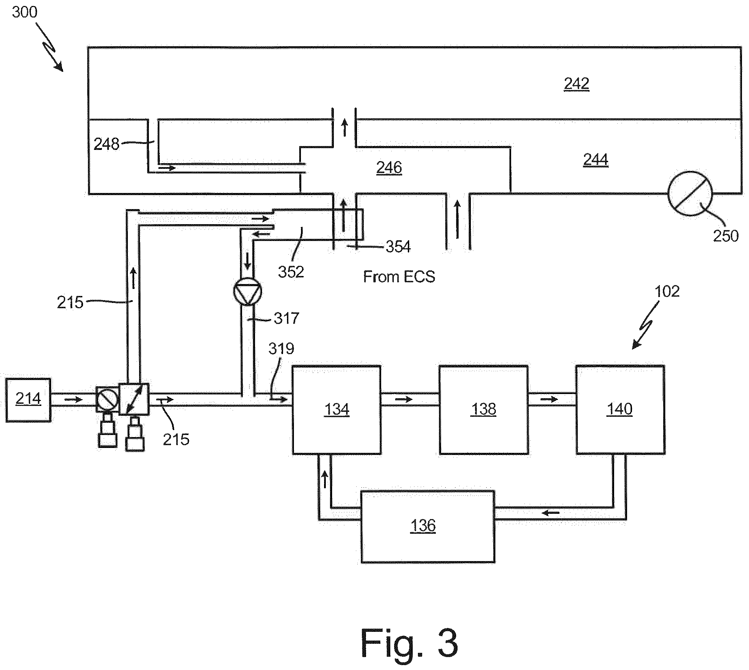

FIG. 3 schematically illustrates second alternative cooling air source 300, which includes many of the same components as cooling air source 200, but alternatively relies on conditioned ECS air as a heat sink. As can be seen in FIG. 3, cooling air source 300 includes dedicated heat exchanger 352 in thermal communication with ECS air outlet 354, which can contain conditioned ECS air at temperature of around 30°F. Mixing air 317 is formed by flowing bleed air 215 from bleed air source 214 through heat exchanger 352. Mixing air 317 can then be combined with additional bleed air 215 (if necessary) to form reaction air 319.

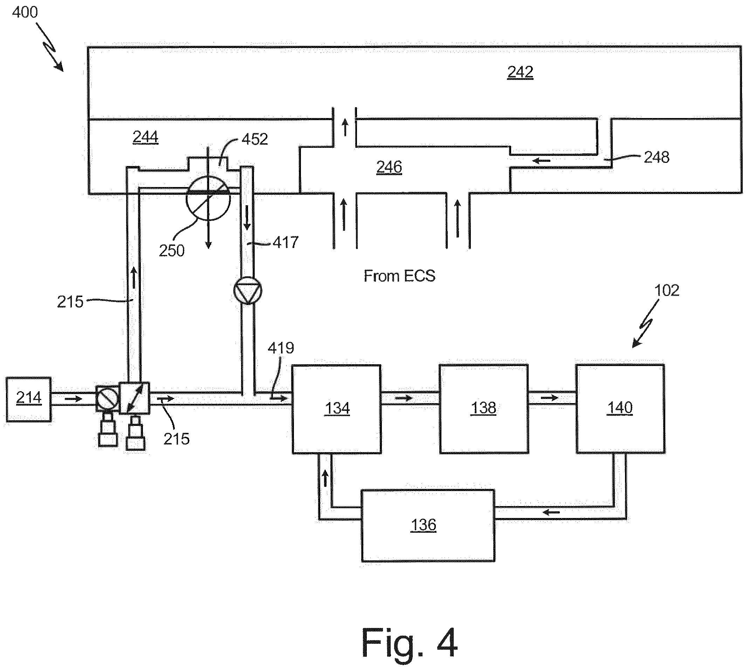

FIG. 4 schematically illustrates third alternative cooling air source 400, which includes many of the same components as cooling air sources 200 and 300, but alternatively relies on cabin exhaust air as a heat sink. As can be seen in FIG. 4, cooling air source 400 includes dedicated heat exchanger 452 in thermal communication with cabin exhaust outlet 250 (shown "flipped" with recirculation line 248 for simplicity). As was described above, cabin air can be displaced by air entering cabin 242 from mix manifold 246, and that air can exit cabin 242 via exhaust valve 250. Like recirculation air, cabin exhaust air can be below 120°F, and thus acts as a heat sink for cooling bleed air 214 passed through heat exchanger 452 to form mixing air 417. Mixing air 417 can then be combined with additional bleed air 215 (if necessary) to form reaction air 419.

The disclosed cooling air sources 100-400 have many benefits. Each cooling air source obviates the need for a dedicated heat exchanger within the ECS ram air circuit to create reaction air (119-419) at or below 350°F for catalytic inerting. The first source (ECS 100) uses existing components, while the dedicated heat exchangers of sources 200-400 can be relatively small due to the cool heat sink temperatures (below 120°F in all cases).

Those of skill in the art will appreciate that other configurations may be used without departing from the scope of the invention. For example, other sources of air may be used for either supplying air to an inerting module and/or for supplying air to drive a turbine and compressor. Further, although there are valves and junctions illustratively shown at certain locations within the system(s), those of skill in the art will appreciate that these locations are merely for example only and other configurations may be used. Moreover, the order of components shown and described herein, in terms of the flow line and direction of air flow through the system may be changed without departing from the scope of the invention. For example, the location of the heat exchangers, compressors, turbines, valves, etc. may be adjusted based on the specific systems and efficiencies therein.

### Discussion of Possible Embodiments

The following are non-exclusive descriptions of possible embodiments of the present invention.

An aircraft inert gas generating system includes a fuel source configured to supply fuel, a stream of reaction air having a first temperature, an air-fuel mixing unit configured to receive an amount of the fuel and an amount of the reaction air stream to create an air-fuel mixture, and a catalytic oxidation unit configured to receive and react the air-fuel mixture. The stream of reaction air includes an amount of mixing air from a mixing air source, and the mixing air source includes a primary heat exchanger of an aircraft ram circuit and a cooling air extraction element proximate the heat exchanger.

The system of the preceding paragraph can optionally include, additionally and/or alternatively, any one or more of the following features, configurations and/or additional components:
In the above system, the cooling air extraction element can be a cold corner tap located at an outlet of the heat exchanger.

In any of the above systems, the mixing air can have a second temperature.

In any of the above systems, the stream of reaction air can further include an amount of compressed air from a compressed air source, and the compressed air can have a third temperature higher than the first and second temperatures.

In any of the above systems, the first temperature can be below 350°F (170°C).

An aircraft inert gas generating system includes a fuel source configured to supply fuel, a stream of reaction air having a first temperature, an air-fuel mixing unit configured to receive an amount of the fuel and an amount of the reaction air stream to create an air-fuel mixture, and a catalytic oxidation unit configured to receive and react the air-fuel mixture. The stream of reaction air includes an amount of mixing air, and the mixing air includes cool air from a heat sink air source.

The system of the preceding paragraph can optionally include, additionally and/or alternatively, any one or more of the following features, configurations and/or additional components:
The above system can further include an amount of compressed air from a compressed air source, the compressed air having a second temperature.

In any of the above systems, the cool air can have a third temperature lower than the first and second temperatures.

In any of the above systems, the third temperature can be below 120°F (49°C).

Any of the above systems can further include a heat exchanger for regulating a temperature of the cool air.

In any of the above systems, the heat sink air source can be a cabin recirculation air line.

In any of the above systems, the heat sink air source can be an environmental control system.

In any of the above systems, the heat sink air source can be a cabin exhaust air outlet.

A method of generating inert gas for use in an aircraft includes supplying fuel to an air-fuel mixing unit, supplying a stream of reaction air at a first temperature to the air-fuel mixing unit, and generating an air-fuel mixture within the air-fuel mixing unit. The method further includes providing the mixture to a catalytic oxidation unit and reacting the mixture in the catalytic oxidation unit to produce the inert gas. The stream of reaction air includes an amount of mixing air from a mixing air source, and the amount of mixing air has a second temperature.

The method of the preceding paragraph can optionally include, additionally and/or alternatively, any one or more of the following features, configurations and/or additional components:
The above method can further include supplying an amount of compressed air from a compressed air source to the stream of reaction air.

In any of the above methods, the mixing air source can include a ram circuit primary heat exchanger and a cooling air extraction element proximate the heat exchanger.

In any of the above methods, the mixing air source can further include a heat sink air source for providing a stream of cool air.

In any of the above methods, the heat sink air source can be a cabin recirculation air line.

In any of the above methods, the heat sink air source can be an environmental control system.

In any of the above methods, the heat sink air source can be a cabin exhaust air outlet.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An aircraft inert gas generating system comprising:
a fuel source configured to supply fuel;
a stream of reaction air (119) having a first temperature;
an air-fuel mixing unit configured to receive an amount of the fuel and an amount of the reaction air stream (119) to create an air-fuel mixture; and
a catalytic oxidation unit configured to receive and react the air-fuel mixture;
wherein the stream of reaction air (119) comprises an amount of mixing air (117), the mixing air (117) comprising cool air from a heat sink air source.

2. The system of claim 1 and further comprising: an amount of compressed air (115) from a compressed air source (114), the compressed air (115) having a second temperature.

3. The system of claim 2, wherein the cool air has a third temperature lower than the first and second temperatures, and preferably wherein the third temperature is below 120°F (49°C).

4. The system of any of claims 1 to 3 and further comprising: a heat exchanger (108) for regulating a temperature of the cool air.

5. The system of any of claims 1 to 4, wherein the heat sink air source is a cabin recirculation air line.

6. The system of any of claims 1 to 4, wherein the heat sink air source is an environmental control system.

7. The system of any of claims 1 to 4, wherein the heat sink air source is a cabin exhaust air outlet.

8. An aircraft inert gas generating system comprising:
a fuel source configured to supply fuel;
a stream of reaction air (119) having a first temperature;
an air-fuel mixing unit configured to receive an amount of the fuel and an amount of the reaction air stream (119) to create an air-fuel mixture; and
a catalytic oxidation unit configured to receive and react the air-fuel mixture;
wherein the stream of reaction air (119) comprises an amount of mixing air (117) from a mixing air source comprising:
a primary heat exchanger (108) of an aircraft ram circuit; and
a cooling air extraction element (128) proximate the heat exchanger (108).

9. The system of claim 8, wherein the cooling air extraction element (128) is a cold corner tap located at an outlet of the heat exchanger (108).

10. The system of claims 8 or 9, wherein the mixing air (117) has a second temperature, and preferably wherein the stream of reaction air (119) further comprises an amount of compressed air (115) from a compressed air source (114), and wherein the compressed air (115) has a third temperature higher than the first and second temperatures, and preferably wherein the first temperature is below 350°F (170°C).

11. A method of generating inert gas for use in an aircraft, the method comprising:
supplying fuel to an air-fuel mixing unit;
supplying a stream of reaction air at a first temperature to the air-fuel mixing unit;
generating an air-fuel mixture within the air-fuel mixing unit;
providing the mixture to a catalytic oxidation unit; and
reacting the mixture in the catalytic oxidation unit to produce the inert gas;
wherein the stream of reaction air comprises an amount of mixing air from a mixing air source, the amount of mixing air having a second temperature.

12. The method of claim 11 and further comprising: supplying an amount of compressed air from a compressed air source to the stream of reaction air.

13. The method of claim 12, wherein the mixing air source comprises:
a ram circuit primary heat exchanger; and
a cooling air extraction element proximate the heat exchanger.

14. The method of claim 12, wherein the mixing air source comprises: a heat sink air source for providing a stream of cool air.

15. The method of claim 14, wherein the heat sink air source is a cabin recirculation air line.
